# EUROPÄISCHE PATENTANMELDUNG

(11) **EP 2 239 079 A1**
(43) Veröffentlichungstag der Anmeldung: **13.10.2010**
(21) Anmeldenummer: 10006982.2
(22) Anmeldetag: 23.06.2008
(51) Int. Cl.: B23K 1/00, B23K 1/19, B23P 6/04, F01D 5/00, B23K 101/00

(54) **Verfahren zum Löten mit mehrstufigem Temperaturprofil**

(62) Teilanmeldung aus: 08011375.6
(71) Anmelder: SIEMENS AKTIENGESELLSCHAFT, 80333 München (DE)
(72) Erfinder: Berger, Ingo, 15739 Zeuthen (DE); Münzer, Jan, 10439 Berlin (DE); Reinkensmeier, Ingo, 58730 Fröndenberg (DE); Settegast, Silke, 10439 Berlin (DE)

(57) **Zusammenfassung**

Bei Lötprozessen nach dem Stand der Technik findet oft eine ungenügende Anbindung an das Substrat statt.
Erfindungsgemäß wird ein Temperaturschema vorgeschlagen, bei dem die Temperatur während des Lötvorgangs sukzessive erniedrigt wird und bei dem nur vier Temperaturplateaus (16', 16", 16"', 16"") zum Löten verwendet werden.

## Beschreibung

Die Erfindung betrifft einen Lötprozess mit mehreren Temperaturplateaus.

Löten ist ein bekannter Prozess zum Verbinden von Werkstücken oder zum Reparieren.

Bauteile werden auch oft mit Löteinsätzen versehen, wobei das Lotmaterial, das Substrat des Bauteils als auch der Löteinsatz verschiedene Materialien aufweisen.

Beim Löten muss darauf geachtet werden, dass in der Lotverbindung keine Hohlräume entstehen, die die mechanische Tätigkeit reduzieren.

Es ist daher Aufgabe der Erfindung ein Verfahren aufzuzeigen, bei dem keine Hohlräume beim Löten entstehen.

Die Aufgabe wird gelöst durch ein Verfahren gemäß Anspruch 1. In den Unteransprüchen sind weitere vorteilhafte Maßnahmen aufgelistet, die beliebig miteinander kombiniert werden können, um weitere Vorteile zu erzielen.

Es zeigen:
- Figur 1: ein Bauteil mit einem Löteinsatz,
- Figur 2: ein Löteinsatz,
- Figur 3, 4: das Temperaturverfahren des Lötens,
- Figur 5: eine Gasturbine,
- Figur 6: perspektivisch eine Turbinenschaufel,
- Figur 7: perspektivisch eine Brennkammer und

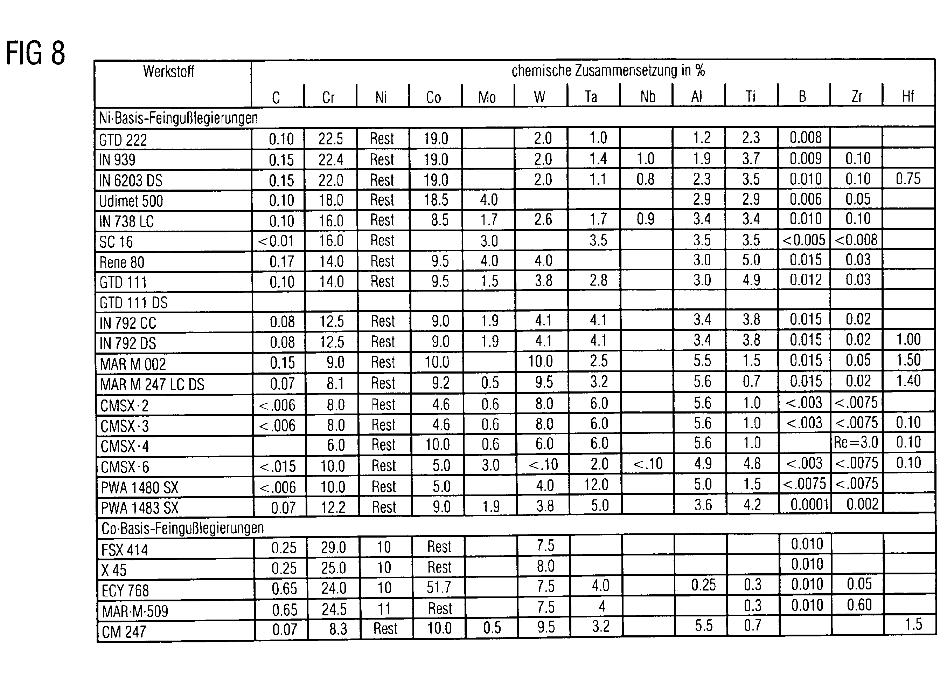

- Figur 8: eine Liste von verwendeten Superlegierungen.

Die Figuren und die Beschreibung stellen nur Ausführungsbeispiele der Erfindung dar.

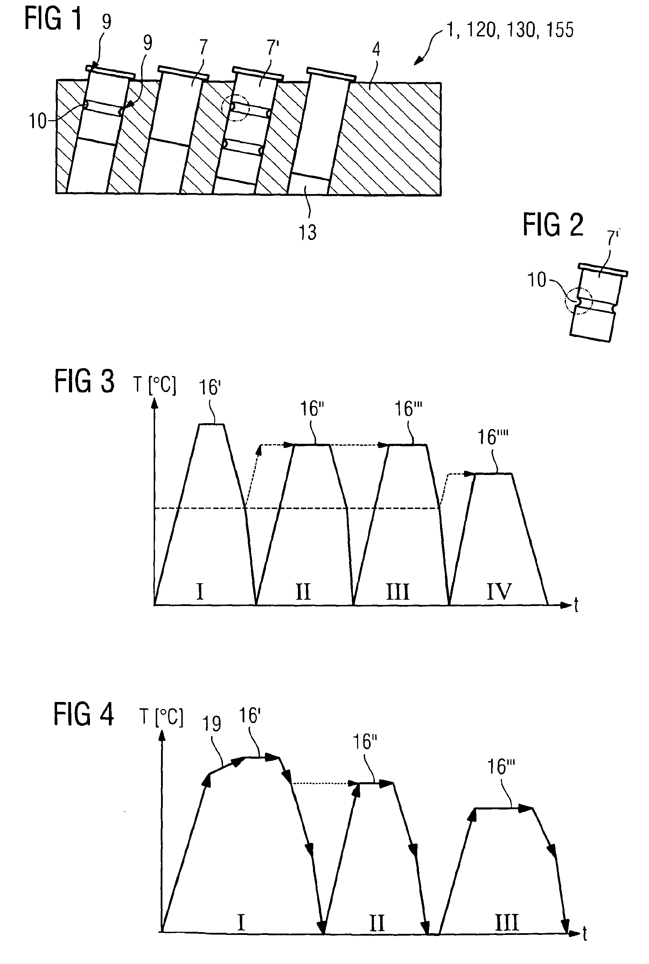

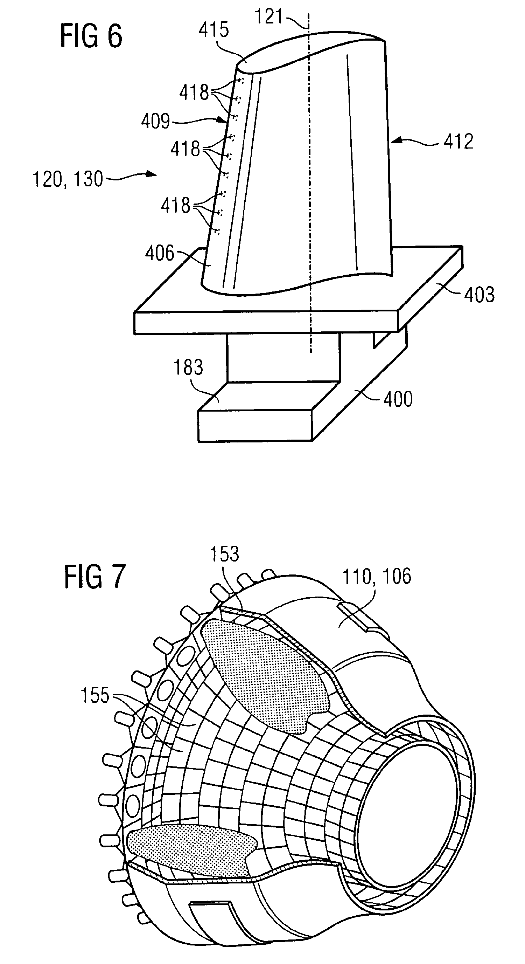

Figur 1 zeigt ein Bauteil 1, 120, 130, 155 mit einem Substrat 4.
Das Substrat 4 weist vorzugsweise das Material RENE80 oder Alloy 247 LC CC auf. Weitere vorteilhaft zu verwendende Superlegierungen sind in Figur 7 aufgelistet.
Das Substrat 4 weist eine Vertiefung oder ein Loch 13 auf, das verschlossen werden soll. Dies geschieht durch Löten mittels eines Lotmaterials 9 oder das Loch 13 wird durch einen Löteinsatz 7 oder 7' (Fig. 2) und einem Lotmaterial 9 verschlossen.
Dies kann dadurch geschehen, dass auf den Löteinsatz 7 Lotmaterial 9 großflächig aufgetragen wird oder, wie im Fall des Löteinsatzes 7', vorzugsweise eine Einschnürung 10 als Lotdepot für Lotmaterial 9 vorhanden ist.

Der Löteinsatz 7, 7' besteht vorzugsweise aus dem Material IN625 oder Hastelloy X.
Als Lotmaterial 9 wird vorzugsweise die Lotlegierung NI105 verwendet, die eine Löttemperatur von 1190°C aufweist oder die Lotlegierung AMDRY788, die eine Löttemperatur von 1230° aufweist.

Erfindungsgemäß wird vorzugsweise das Verfahren mit mehreren Temperaturplateaus 16', 16", ... durchgeführt. Vorzugsweise werden drei (Fig. 4) oder vier (Fig. 3) Temperaturplateaus 16', 16", ... verwendet, um die Anbindung des Lotmaterials 9 an das Substrat 4 durch Diffusion zu verbessern.

In Figur 3 ist ein Temperaturverlauf dargestellt, bei dem verschiedene Temperaturplateaus 16', 16" verwendet werden. Dabei wird in einem ersten Schritt das Bauteil 1, 120, 130, 155 auf eine Temperatur T' erwärmt und dort für vorzugsweise zwei Stunden gehalten. Die Temperatur T' des ersten Temperaturplateaus 16' ist vorzugsweise die höchste Temperatur Tₘₐₓ, im ganzen Lötverfahren also T'>T", T"', T"", ..., wodurch am Anfang das Lotmaterial 9 vollständig aufgeschmolzen wird.

Die Temperatur T' = Tₘₐₓ ist vorzugsweise höher als die üblich verwendete Löttemperatur dieses Lotmaterials 9 (bei NI105 1190°C), so dass bei NI105 1200°C verwendet wird. Es kann aber auch die übliche Löttemperatur wie bei AMDRY788 (1230°C) zum Einsatz kommen.

Nach dem ersten Temperaturplateau 16' erfolgt eine Absenkung der Temperatur T auf vorzugsweise unter die Temperatur T" des nachfolgenden Temperaturplateaus 16", vorzugsweise 650°C, ganz vorzugsweise auf Raumtemperatur. Bei Rene80 und Alloy 247 beträgt die Temperatur vorzugsweise 540°.

Danach erfolgt ein Wiedererwärmen auf ein zweites Temperaturplateau 16" mit der Temperatur T". Dies gilt vorzugsweise auch für die Übergänge zwischen den weiteren Temperaturplateaus 16", 16"', .... Dabei wird eine Haltezeit vorzugsweise von zwei bis vier Stunden, insbesondere für vier Stunden verwendet.

Die Temperatur T" des zweiten Temperaturplateaus 16" ist gegenüber der Temperatur T' des ersten Temperaturplateau 16' vorzugsweise um mindestens um 90°C erniedrigt, insbesondere um 100°C.

In der Figur 3 wird dieser Schritt noch ein zweites Mal wiederholt.
Die Temperatur T"' des dritten Temperaturplateaus 16"' wird ebenfalls erniedrigt, aber nicht so deutlich zwischen T' und T", nämlich vorzugsweise um 15°C.

Nach dem zweiten Temperaturplateau 16" erfolgt eine Absenkung vorzugsweise unter die Temperatur T"' des dritten, also nachfolgenden Temperaturplateau 16"'. Danach folgt ein Wiederhochheizen auf die Temperatur T"'.

Als letzter Schritt wird eine Wärmebehandlung bei vorzugsweise einer erneut erniedrigten Temperatur T"" für eine deutlich längere Haltezeit von zwölf oder zwanzig Stunden durchgeführt.
Die Haltetemperatur des letzten Temperaturplateaus 16"" ist gegenüber der vorletzten Temperatur T"' vorzugsweise um 190°C erniedrigt.
Dieses Verfahren eignet sich vorzugsweise für Rene80 mit den Loten NI105 und C0101.

In Figur 4 wird ein dreistufiges Lötverfahren mit drei Temperaturplateaus 16', 16", 16"' dargestellt.

Dabei wird in einem ersten Schritt das Bauteil 1, 120, 130, 155 auf eine Temperatur T' erwärmt und dort für vorzugsweise zwei Stunden gehalten. Die Temperatur T' des ersten Temperaturplateaus 16' ist vorzugsweise die höchste Temperatur Tₘₐₓ, im ganzen Lötverfahren also T'>T", T"' wodurch am Anfang das Lotmaterial 9 vollständig aufgeschmolzen wird.

Diese maximale Temperatur Tₘₐₓ ist vorzugsweise höher als die üblich verwendete Löttemperatur dieses Lotmaterials 9 (bei NI105 1190°C), so dass bei NI105 1200°C verwendet wird.

Nach dem ersten Temperaturplateau 16' erfolgt eine Absenkung der Temperatur T, vorzugsweise unter die Temperatur T" des nachfolgenden Temperaturplateaus 16".

Danach erfolgt ein Wiedererwärmen auf ein zweites Temperaturplateau 16" mit der Temperatur T". Dies gilt vorzugsweise auch für die Übergänge zwischen den weiteren Temperaturplateaus 16", 16"'. Dabei wird eine Haltezeit vorzugsweise von zwei bis vier Stunden, insbesondere für vier Stunden verwendet. Es gilt jeweils vorzugsweise T' - T'" = 30°C bis 150°C, insbesondere 120°C bis 150°C; T" - T"' = 30°C bis 210°C, insbesondere 180°C bis 210°C. Vorzugsweise sind die Haltezeiten der ersten beiden Temperaturplateaus 16', 16 " gleich, vorzugsweise 2h.
Vorzugsweise ist die Haltezeit des dritten Temperaturplateaus 16"' mindestens zweimal so lang, vorzugsweise zehnmal so lang. Da die Temperatur des dritten Temperaturplateaus 16"' niedriger ist, verringern sich die Diffusionsgeschwindigkeiten und die Haltezeiten verlängern sich.

Vorzugsweise wird die höchste Temperatur T' mit einer Rampe 19, d.h. mit einer geringeren Heizrate aufgefahren, um Überhitzungen zu vermeiden.
Vorzugsweise wird als Substratmaterial auch Alloy 247 LL CC verwendet (Fig. 4).
Dabei wird vorzugsweise die Lotlegierung AMDRY788 verwendet.

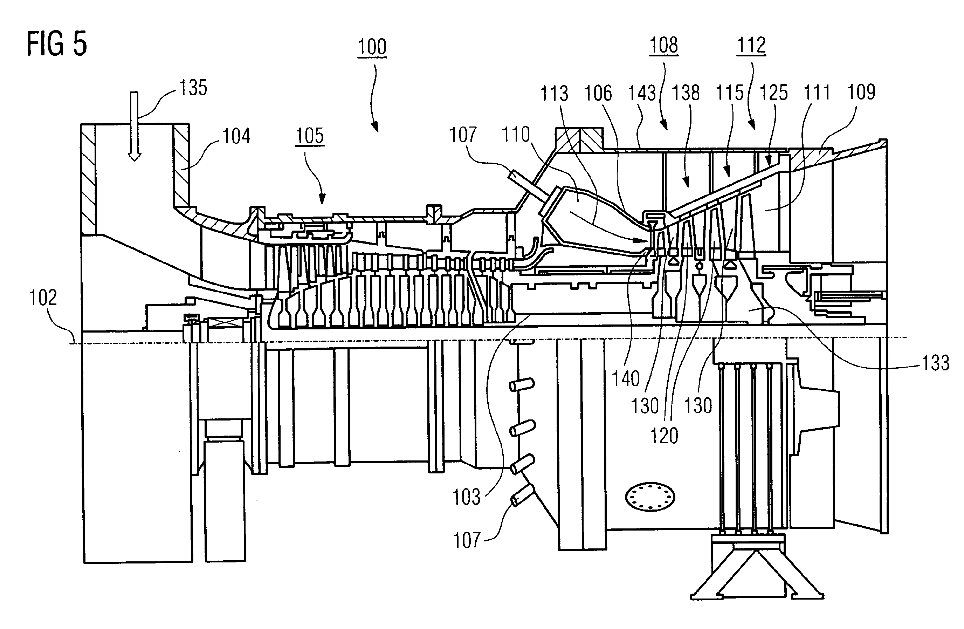

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 7 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Löten eines Bauteils (1, 120, 130, 155) mit einem Lotmaterial (9),
insbesondere eines Löteinsatzes (7, 7') in einem Substrat (4) eines Bauteils (1, 120, 130, 155),
bei dem nur vier Temperaturplateaus (16', 16", 16"', 16"") zum Löten verwendet werden.

2. Verfahren nach Anspruch 1,
bei dem zu Beginn des Lötens das Bauteil (1, 120, 130, 155) mit einem Lotmaterial (9) auf das erste Temperaturplateau (16') geheizt wird und
insbesondere dort für eine bestimmte Zeit gehalten wird.

3. Verfahren nach Anspruch 1 oder 2,
bei dem die Temperatur (T') des ersten Temperaturplateaus (16') die höchste Temperatur im Lötverfahren darstellt.

4. Verfahren nach Anspruch 1, 2 oder 3,
bei dem die Temperatur (T") des zweiten Temperaturplateaus (16") niedriger ist als die Temperatur (T') des ersten Temperaturplateaus (16'): T"<T'.

5. Verfahren nach Anspruch 1, 2, 3 oder 4,
bei dem die Temperatur (T) bei der Temperaturabsenkung von einer Temperatur (T', T", ...) eines Temperaturplateaus (16', 16",...) unter die Temperatur (T", T"') des nachfolgenden Temperaturplateaus (16", ...) gesenkt wird und dann wieder auf die Temperatur (T", T"') des nachfolgenden Temperaturplateaus (16", ...) erhöht wird.

6. Verfahren nach Anspruch 1, 2, 3, 4 oder 5,
bei dem für die Temperaturabsenkungen zwischen den Temperaturplateaus (16', 16", 16"', ...) die Temperatur (T) auf kleiner als 650°C,
vorzugsweise kleiner 540°C oder
ganz vorzugsweise auf Raumtemperatur
abgekühlt wird,
bevor die Temperatur auf die Temperatur des nachfolgenden Temperaturplateaus (16", 16"', ...) wieder erhöht wird.

7. Verfahren nach Anspruch 1, 2, 3, 4, 5 oder 6,
bei dem die Temperatur (T', T", T"', ...) der Temperaturplateaus (16', 16", 16"', ...) stetig abnimmt.

8. Verfahren nach Anspruch 1,
bei dem die Temperatur (T) des letzten Temperaturplateaus (16", 16"', 16"", ...) die minimalste Temperatur der Temperaturplateaus (16', 16", 16"', ...) ist.

9. Verfahren nach Anspruch 1, 2 oder 3,
bei dem die Löttemperatur (T) für das erste Temperaturplateau (16') höher ist als die im Stand der Technik für das Lotmaterial (9) verwendete Löttemperatur,
insbesondere mindestens um 10°C,
ganz insbesondere um 10°C.

10. Verfahren nach Anspruch 1, 4, 5 oder 6,
bei dem die Temperatur (T") des zweiten Temperaturplateaus (16") mindestens 90°C niedriger ist als die Temperatur (T') des ersten Temperaturplateaus (16').

11. Verfahren nach Anspruch 9 oder 10,
bei dem die Temperatur (T"') des dritten Temperaturprofils (16"') um mindestens 20°C gegenüber der Temperatur (T") des zweiten Temperaturplateaus (16") erniedrigt ist.

12. Verfahren nach Anspruch 1 oder 7,
bei dem das Substrat (4) RENE80 aufweist,
insbesondere daraus besteht.

13. Verfahren nach Anspruch 1,
bei dem das Substrat (4) Alloy LC CC aufweist, insbesondere daraus besteht.

14. Verfahren nach Anspruch 1, 12 oder 13,
bei dem der Löteinsatz IN625 aufweist,
insbesondere daraus besteht.

15. Verfahren nach Anspruch 1, 12 oder 13,
bei dem der Löteinsatz Hastelloy X aufweist, insbesondere daraus besteht.

16. Verfahren nach Anspruch 1, 12 oder 14,
bei dem das Lotmaterial (9) NI105 oder CO101 aufweist, insbesondere daraus besteht.

17. Verfahren nach Anspruch 1, 13 oder 14,
bei dem das Lotmaterial (9) AMDRY 788 aufweist, insbesondere daraus besteht.
